(19) Europäisches Patentamt
European Patent Office
Office européen des brevets

(11) EP 1 643 627 A2

(12) # EUROPEAN PATENT APPLICATION

(43) Date of publication:
**05.04.2006 Bulletin 2006/14**

(51) Int Cl.:
***H02M 7/217*** *(2006.01)*

(21) Application number: **05250772.0**

(22) Date of filing: **10.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.09.2004 JP 2004287607**

(71) Applicant: **FUJITSU LIMITED**
**Kawasaki-shi,**
**Kanagawa 211-8588 (JP)**

(72) Inventors:
- **Gotoh, Kunihiko, c/o Fujitsu Limited**
  **Kawasaki-shi,**
  **Kanagawa 211-8588 (JP)**
- **Yamazaki, Daisuke c/o Fujitsu Limited**
  **Kawasaki-shi,**
  **Kanagawa 211-8588 (JP)**

(74) Representative: **Hitching, Peter Matthew et al**
**Haseltine Lake,**
**Imperial House,**
**15-19 Kingsway**
**London WC2B 6UD (GB)**

(54) **Rectifier circuit**

(57) A rectifier circuit is provided which is capable of improving linearity of a current flowing between its drain and source and of increasing reliability of a transistor. In a diode-connected NMOS (N-type Metal Oxide Semiconductor) transistor (M1), a voltage (Va) fed from a power source is rectified and output as a voltage (Vb). A capacitor (C1) applies a voltage (Vbg) to make a current flow less easily through a parasitic diode (D2) occurring in the transistor (M1). By supplying the voltage (Va) made to be small by a capacitor (C1) to a backgate, an operating point of the parasitic diode (D2) is deviated to cause the current to flow less easily. This causes a current to flow mainly through the transistor (M1), which improves linearity of a voltage to be rectified. Decreased current in the backgate increases reliability of the **transistor (M1).**

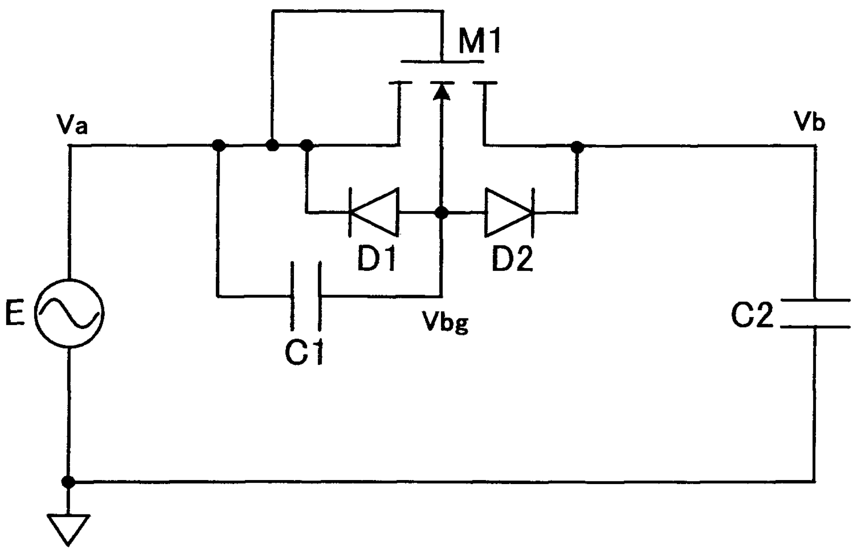


FIG. 1

EP 1 643 627 A2

Printed by Jouve, 75001 PARIS (FR)

**Description**

BACKGROUND OF THE INVENTION

1. Field of the Invention

The present invention relates to a rectifier circuit, and particularly to the rectifier circuit to rectify a voltage.

2. Description of the Related Art

At present, as systems become miniaturized and portable, a rectifier circuit that can operate at low voltages becomes more important (see, for example, Japanese Unexamined Patent Publication Nos. 2001-78461 and Hei. 11-144007). Particularly, an IC (Integrated Circuit) card or an ID (Identification) chip, since neither the IC card nor the ID chip can use a battery as a power source, is expanding its communicable range by deriving power from electromagnetic wave energy being applied to prevent a drop in voltage by using a rectifier circuit that can operate at low voltages. In a rectifier circuit, a diode which is turned ON or OFF depending on whether a voltage between two terminals is high or low or a MOS (Metal Oxide Semiconductor) transitor is employed. A MOS transistor has a terminal for its backgate, in addition to three terminals including a source, drain, and gate, and it is necessary to define connection of the backgate. Between a backgate and source and between a backgate and drain occur parasitic diodes caused by a structure of a transistor.

FIG.16 shows a constructure of a transistor. In FIG.16, an NMOS (N-type MOS) transistor M101 is illustrated. As shown in FIG. 16, a parasitic diode D101 occurs between a backgate and source of the NMOS transistor M101 and a parasitic diode D102 occurs between the backgate and drain of the NMOS transistor M101. Since a voltage at the backgate has to be put in a fixed state, the backgate is connected to either of the source or the drain.

FIG.17 shows a rectifier circuit made up of an NMOS transistor. In the NMOS transistor M102 shown in Fig. 17, its gate is connected to its drain and diode connection is made. As shown in FIG.17, since the backgate of the NMOS transistor M102 is connected to its source, a parasitic diode D103 occurs only between the backgate and drain.

In FIG.17, when the voltage Vb is lower than the voltage Va, the NMOS transistor M102 is turned ON, causing a forward-biased current to flow in a drain-to-source direction. On the contrary, when the voltage Va is lower than the voltage Vb, the NMOS transistor M102 is turned OFF. However, if a potential difference between the voltages Va and Vb exceeds a threshold voltage of the parasitic diode D103, a reverse-biased current flows in a source-to-drain direction.

FIG.18 shows a voltage-current characteristic of the rectifier circuit of FIG.17. In FIG.18, a voltage obtained by subtracting the voltage Vb from the voltage Va is plotted as abscissa and a current being a positive current flowing in the drain-to-source direction as ordinate. Also referring to FIG.18, the voltage "Vthtr" is a threshold voltage that causes the NMOS transistor M102 to make a current flow in the drain-to-source direction and the voltage "Vthd" is a threshold voltage that causes the parasitic diode D103 to make a current flow in the source-to-drain direction. When the voltage Va is higher by the voltage "Vthtr" than the voltage Vb, the NMOS transistor M102 is turned ON, which causes a current to flow in the drain-to-source direction as shown by the solid line in the graph in FIG.18. When the voltage Vb is higher by the voltage "Vthd" than the voltage Va, the parasitic diode D103 is turned ON, which causes a current to flow in the source-to-drain direction as shown by the dotted line in the graph in FIG.18. As a result, if the NMOS transistor M102 is connected in the way shown in FIG.17, the NMOS transistor M102 basically does not function as a rectifier circuit.

FIG.19 shows another rectifier circuit made up of an NMOS transistor. In the NMOS transistor M103 shown in FIG.19, its gate is connected to its drain and diode connection is made. As shown in FIG.19, in the NMOS transistor 103, since its backgate is connected to the drain, a parasitic diode D104 occurs only between the backgate and source. In FIG.19, when the voltage Vb is lower than the voltage Va, the NMOS transistor M103 is turned ON, which causes a forward-biased current to flow in a drain-to-source direction. Moreover, if the voltage Va is higher by a threshold voltage of the parasitic diode D104 than the voltage Vb, a current also flows through the parasitic diode D104. As a result, the rectifier circuit shown in FIG.19 has a voltage-current characteristic obtained by combining the voltage-current characteristic of the transistor NMOS M103 with that of the parasitic diode D104. On the other hand, when the voltage Va is lower than the voltage Vb, the NMOS transistor M103 is turned OFF, causing no current to flow. Also, the parasitic diode D104 is turned OFF and no current flows.

FIG.20 shows a voltage-current characteristic of the NMOS transistor of FIG.19. In FIG. 20, a voltage obtained by subtracting the voltage Vb from the voltage Va is plotted as abscissa and a current being a positive current flowing in a drain-to-source direction as ordinate. Also referring to FIG.20, the voltage "Vthtr" is a threshold voltage that causes the NMOS transistor M103 to make a current flow in the drain-to-source direction. When the voltage Va is higher by the voltage "Vthtr" than the voltage Vb, the NMOS transistor M103 is turned ON, causing a current to flow as shown in FIG.20.

FIG.21 shows a voltage-current characteristic of the parasitic diode D104 of FIG.19. In FIG.19, a voltage obtained by subtracting the voltage Vb from the voltage Va is plotted as abscissa and a current being a positive current flowing through the parasitic diode D104 in a drain-to-source direction as ordinate. Also referring to FIG.21, the voltage "Vthd" is a threshold voltage that causes the parasitic diode D104 to make a current flow in the drain-to-source direction. When the voltage Va is higher by the voltage "Vthd" than the voltage Vb, the parasitic diode D104 is turned ON, causing a current to flow as shown in FIG.21.

FIG.22 shows a voltage-current characteristic of the rectifier circuit of FIG.19. In FIG.22, a voltage obtained by subtracting the voltage Vb from the voltage Va is plotted as abscissa and a current being a positive current flowing in a drain-to-source direction as ordinate. Also referring to FIG.22, the voltage "Vthtr" is a threshold voltage that causes the NMOS transistor M103 to make a current flow in the drain-to-source direction and a voltage "Vthd" is a threshold voltage that causes the parasitic diode D104 to make a current flow in the drain-to-source direction.

As explained above, the rectifier circuit shown in FIG.19 has a voltage-current characteristic obtained by combining the voltage-current characteristic of the transistor NMOS M103 with that of the parasitic diode D104.

Therefore, as shown in FIG. 22, values calculated by adding values obtained from the voltage-current characteristic of the NMOS transistor M103 to values obtained from the voltage-current-characteristic of the parasitic diode D104 become values obtained from the voltage-current characteristic of the rectifier circuit of FIG.19. In the rectifier circuit shown in FIG.19, a threshold voltage of the NMOS transistor M103 is different from that of the parasitic diode D104 and, as a result, linearity of a current flowing between the drain and source cannot be obtained.

FIG.23 shows a rectifier circuit made up of a PMOS (P-type MOS) transistor. In the PMOS transistor M104, its gate is connected to its drain and diode connection is made. As shown in FIG.23, a backgate of the PMOS transistor M104 is connected to its source and, therefore, a parasitic diode D105 occurs only between the backgate and drain.

In FIG.23, when the voltage Vb is lower than the voltage Va, the PMOS transistor M104 is turned ON, which causes a forward-biased current to flow in a source-to-drain direction. On the contrary, when the voltage Va is lower than the voltage Vb, the PMOS transistor M104 is turned OFF. However, if a potential difference between the voltages Va and Vb exceeds a threshold voltage of the parasitic diode D105, a reverse-biased current flows in a drain-to-source direction. A voltage-current characteristic of the rectifier circuit shown in FIG. 23 is as shown in FIG.18, where the "Vthtr" denotes a threshold voltage of the PMOS transistor M104 and the "Vthd" denotes a threshold voltage of the parasitic diode D105.

FIG.24 shows another rectifier circuit made up of a PMOS transistor. In the PMOS transistor M105, its gate is connected to its drain and diode connection is made. As shown in FIG.24, a backgate of the PMOS transistor M105 is connected to the drain and, therefore, a parasitic diode D106 occurs only between the backgate and source. In FIG.24, when the voltage Vb is lower than the voltage Va, the PMOS transistor M105 is turned ON, which causes a forward-biased current to flow in a source-to-drain direction. Moreover, if the voltage Va is higher by a threshold voltage of the parasitic diode D106 than the voltage Vb, a current also flows through the parasitic diode D106. As a result, the rectifier circuit shown in FIG.24 has a voltage-current characteristic obtained by combining the voltage-current characteristic of the transistor NMOS M105 with that of the parasitic diode D106. A voltage-current characteristic of the rectifier circuit shown in FIG. 24 is as shown in FIG.22, where the "Vthtr" denotes a threshold voltage of the PMOS transistor M105 and the "Vthd" denotes a threshold voltage of the parasitic diode D106.

Moreover, if the PMOS transistor M105 is connected in the way as shown in FIGS.17 and 23, the PMOS transistor M105 basically does not function as a rectifier circuit. Therefore, the backgate has to be connected in the way as shown in FIGS. 19 and 24. However, in the conventional rectifier circuits as shown in FIGS. 19 and 24, as described above, the linearity of the current flowing between the drain and source can not be obtained and a current flows through the backgate, which triggers a latch-up state of the transistors, thus presenting a problem that reliability of the transistors decreases.

## SUMMARY OF THE INVENTION

In view of the foregoing, it is an object of the present invention to provide a rectifier circuit capable of improving linearity of a current flowing between a drain and source and of increasing reliability of a transistor being used.

According to one aspect of the present invention, there is provided a rectifier circuit for rectifying a voltage including a diode-connected transistor and a bias voltage supplying circuit to supply a bias voltage to a backgate in the transistor and to calibrate an operating point of a parasitic diode occurring in the transistor.

The above and other objects, features and advantages of the present invention will become apparent from the following description when taken in conjunction with the accompanying drawings which illustrate preferred embodiments of the present invention by way of example.

## BRIEF DESCRIPTION OF THE DRAWINGS

FIG.1 shows a rectifier circuit according to a first embodiment of the present invention.
FIG.2 shows a voltage waveform at each portion making up the rectifer circuit of FIG. 1.
FIG.3 shows a rectifier circuit according to a second embodiment of the present invention.
FIG.4 shows a voltage waveform at each portion making up the rectifer circuit of FIG. 3.
FIG.5 shows a rectifier circuit according to the third embodiment of the present invention.
FIG.6 shows a rectifier circuit according to the fourth embodiment of the present invention.
FIG.7 shows a block diagram illustrating an IC card to which the rectifier circuit of the present invention is applied.
FIG.8 shows the rectifier circuit shown in FIG. 3 in which the backgate is connected directly to the drain.
FIG.9 shows voltages to be input and output to and from the rectifier circuit shown in FIG.8.
FIG.10 shows a current flowing through the backgate in the rectifier circuit shown in FIG.8.
FIG.11 shows the rectifier circuit shown in FIG. 3 in which the backgate is connected directly to the source.
FIG.12 shows voltages to be input and output to and from the rectifier circuit shown in FIG.11.
FIG.13 shows a current flowing through the backgate in the rectifier circuit shown in FIG.11.
FIG.14 shows voltages to be input and output to and from the rectifier circuit shown in FIG.3.
FIG.15 shows a current flowing through the backgate in the rectifier circuit shown in FIG.3.
FIG.16 shows a structure of a transistor.
FIG.17 shows a rectifier circuit made up of an NMOS transistor.
FIG.18 shows a voltage-current characteristic of the rectifier circuit of FIG. 17.
FIG.19 shows another rectifier circuit made up of an NMOS transistor.
FIG.20 shows a voltage-current characteristic of the NMOS transistor of FIG. 19.
FIG.21 shows a voltage-current characteristic of the diode of FIG. 19.
FIG.22 shows a voltage-current characteristic of the rectifier circuit of FIG. 19.
FIG.23 shows a rectifier circuit made up of a PMOS transistor.
FIG.24 shows another rectifier circuit made up of a PMOS transistor.

## DESCRIPTION OF THE PREFERRED EMBODIMENTS

Preferred embodiments of the present invention will be described below with reference to the accompanying drawings, wherein like reference numerals refer to like elements throughout.

A first embodiment of the present invention is described by referring to drawings. FIG.1 shows a rectifier circuit according to the first embodiment of the present invention. As shown in FIG. 1, in the NMOS transistor M1 its gate is connected to its drain and diode connection is made. Between a backgate and drain of the NMOS transistor M1 occurs a parasitic diode D1 and between the backgate and source of the transistor M1 occurs a parasitic diode D2. Between the backgate and drain of the NMOS transistor M1 is connected a capacitor C1. A voltage at the drain is applied to the backgate through the capacitor C1 and is put into a fixed state. To the drain of the NMOS transistor M1 is connected a power source E to output a voltage Va of an alternating current to be rectified. To the source is connected a capacitor C2 to keep a rectified voltage Vb constant. Moreover, a voltage Vbg denotes a voltage of the backgate.

When the voltage Va is higher than the voltage Vb, the NMOS transistor M1 is turned ON, which causes a current to flow in a drain-to-source direction. Also, since the voltage Va is applied also to the backgate through the capacitor C1, when the voltage Vbg of the backgate is higher than the voltage Vb, the parasitic diode D2 is turned ON, causing a current to flow through the backgate. However, since inputting of the voltage Vbg of the backgate is suppressed by the capacitor C1 compared with the case of inputting of the voltage Va by direct connection between the drain and the backgate, a current flows less easily through the parasitic diode D2.

On the contrary, when the voltage Va is lower than the voltage Vb, the NMOS transistor M1 is turned OFF, causing no current to flow. Moreover, a reverse-biased current is applied to the parasitic diode D2 and no current flows through the backgate.

FIG.2 shows a waveform of a voltage at each portion making up the rectifer circuit of FIG. 1. In FIG. 2, the waveform a1 shows a waveform of the voltage Va, the waveform a2 shows a waveform of the voltage Vbg, and the waveform a3 shows a waveform of the voltage Vb. As shown by the waveforms a1 and a2, an amplitude of the voltage Vbg is made smaller than that of the voltage Va due to a drop in voltage at the capacitor C1. As a result, a voltage to be applied to an anode of the parasitic diode D2 is made smaller than the voltage Va. On the other hand, to a cathode of the parasitic diode D2 is applied some amount of the voltage Vb to be output from the capacitor C2. Therefore, the voltage to be applied to the parasitic diode D2, as shown by a both-directional arrow mark, is made lower compared with the case of inputting of the voltage Va by direct connection between the backgate and drain, which causes a current to flow less easily through the parasitic diode D2. Thus, by connecting the capacitor C1 between the back gate and drain of the NMOS transistor M1 so that an operating point of the parasitic diode D2 is deviated, a current is made to flow less easily through the backgate. This makes a current flow mainly through the NMOS transistor M1, thus enabling improvement of linearity of the current flowing between the drain and source. Additionally, this causes a current flowing through the backgate to decrease, thus enabling an increase in reliability of the NMOS transistor M1.

A second embodiment of the present invention is described by referring to drawings. FIG.3 shows a rectifier circuit of the second embodiment of the present invention. In the second embodiment, as shown in FIG.3, instead of the diode-connected NMOS transistor M1 employed in the first embodiment, a PMOS transistor M11 is used.

As shown in FIG.3, in the PMOS transistor M11, its gate is connected to its drain and diode connection is made. Between a backgate and source of the PMOS transistor M11 occurs a parasitic diode D11 and between the backgate and drain of the transistor M11 occurs a parasitic diode D12. Between the backgate and drain of the PMOS transistor M11 is connected a capacitor C11. A voltage of the drain is applied to the backgate through the capacitor C11 and is put into a fixed state. To the source of the PMOS transistor M11 is connected a power source E to output a voltage Va of an alternating current to be rectified. To the drain of the PMOS transistor M11 is connected a capacitor C12 to keep the rectified voltage Vb constant. Moreover, the voltage Vbg denotes a voltage of the backgate.

When the voltage Va is higher than the voltage Vb, the PMOS transistor M11 is turned ON, causing a current to flow in a source-to-drain direction. Also, when the votage Vbg to be applied to a cathode of the parasitic diode D11 is lower than the voltage Va, the parasitic diode D11 is turned ON, causing a current to flow through the backgate. However, since the voltage Vbg is boosted by the capacitor C11, unlike in the case where the backgate is directly connected to the drain, a current flows less easily through the parasitic diode D11. On the contrary, when the voltage Va is smaller than the voltage Vb, the PMOS transistor M11 is turned OFF, causing no current to flow. Furthermore, since a reverse-biased voltage is applied to the parasitic diode D11, no current flows through the backgate.

FIG.4 shows a voltage waveform at each portion making up the rectifer circuit of FIG. 3. In FIG. 4, the waveform b1 shows a waveform of the voltage Va, the waveform b2 shows a waveform of the voltage Vbg, and the waveform b3 shows a waveform of the voltage Vb. As shown by the waveforms b2 and b3, the voltage Vbg of the backgate is boosted by the capacitor C11 so that the voltage Vbg is higher than the voltage Vb. Therefore, since a voltage to be input to a cathode of the parasitic diode D11 is boosted more compared with the case where the voltage Vb is input by direct connection between the backgate and drain, as shown by a both directional arrow mark in FIG.4, the voltage to be input to the parasitic diode D11 is made smaller, which causes a current to flow less easily through the parasitic diode D11.

Thus, by connecting the capacitor C11 between the backgate and drain of the PMOS transistor M11 so that an operating point of the parasitic diode D11 is deviated, a current is made to flow less easily through the backgate. This makes a current flow mainly through the PMOS transistor M11, thus improving linearily of a current flowing between the drain and source. Additionally, this causes a current flowing through the backgate to decrease, thus increasing reliability of the PMOS transistor M1.

A third embodiment of the present invention is described by referring to drawings. FIG.5 shows a rectifier circuit of the third embodiment of the present invention. In the third embodiment, as shown in FIG.5, unlike in the case of the first embodiment, a resistor is additionally connected in parallel to a capacitor C1. In FIG.5, same reference numbers are assigned to the same components as employed in FIG.1 and their descriptions are omitted accordingly.

As shown in FIG.5, the resistor R1 is connected to the capacitor C1 in parallel. In the rectifier circuit shown in FIG. 1, the voltage Vbg depends on the voltage Va and, when the voltage Va has no predetermined amplitude, the voltage Vbg also changes dynamically. For example, in the case of a high-frequency wave obtained by performing amplitude modulation on the voltage Va, when the voltage Va becomes lower than a threshold voltage of the parasitic diode D2, a potential of the capacitor C1 is not determined, causing the voltage Vbg not to be in a fixed state. To prevent this, by connecting the resistor R1 to the capacitor C1 in parallel, even if the voltage Va is made smaller than a threshold voltage of the parasitic diode D2, the voltage Vbg of the backgate is determined, enabling the voltage Vbg to be put in a stable state. Thus, by additionaly connecting the resistor R1, an effect of a bias voltage supplied by the capacitor C1 can be maintained and, further, a direct-current type stabilization in the voltage Vbg can be achieved. Moreover, a value of the resistor R1 is set by considering a time constant to be achived by the capacitor C1.

A fourth embodiment of the present invention is described by referring to drawings. FIG.6 shows a rectifier circuit of the fourth embodiment of the present invention. As shown in FIG. 6, in the NMOS transistor M21, its gate is connected to its drain and diode connection is made. Between the backgate and drain of the NMOS transistor M21 occurs a parasitic diode D21 and between the backgate and source of the transistor M21 occurs a parasitic diode D22. Moreover, between the backgate and source of the transistor M21 occurs a parasitic capacitor Cp.

Between the backgate and source of the NMOS transistor M21 is connected a capacitor C21 having sufficiently larger capacitance compared with that of the parasitic capacitor Cp. A voltage of the drain is applied to the backgate through the capacitor C21 and is put into a fixed state. To the source of the NMOS transistor M21 is connected a power source E to output a voltage Va of an alternating current to be rectified. To the drain of the NMOS transistor M21 is connected a capacitor C22 to keep the rectified voltage Vb constant. Moreover, the voltage Vbg denotes a voltage of the backgate.

If the voltage Va is lower than the voltage Vb, the NMOS transistor M21 is turned ON, causing a current to flow in a drain-to-source direction. At this time point, the voltage Va is applied to the backgate through the parasitic capacitor Cp. If the voltage Vbg of the backgate is larger than a threshold voltage of the parasitic diode D22, the parasitic diode D22 is turned ON, causing a current to flow in the drain-to-source direction. However, since capacitance of the parasitic capacitor Cp is sufficiently smaller than that of the capacitor C21, a voltage to be applied to the parasitic capacitor Cp is low, causing the parasitic diode D22 not to be turned ON. Due to this, no current flows through the backgate.

On the contrary, if the voltage Va is larger than the voltage Vb, the NMOS transistor M21 is turned OFF, causing no current to flow. Moreover, since a reverse-biased voltage is applied also to the parasitic diode D22, no current flows through the backgate.

Thus; by connecting the capacitor C21 between the backgate and drain of the NMOS transistor M21, no current is made to flow through the parasitic diode D22. This causes a current to flow only through the NMOS transistor M21, which enables the improvement of linearity of the current flowing between the drain and the source. Moreover, since no current flows through the backgate, it is possible to increase the reliability of the NMOS transistor M21.

The voltage Vbg of the backgate in the NMOS transistor M21 shown in FIG.6 is expressed by a following equation (1) :

$$Vbg = \{Cp / (Cp + C21)\} \times (Vb - Va) \quad \cdots (1)$$

When the capacitance of the parasitic capacitor Cp is 1p and the capacitance of the capacitor C21 is 100p, the voltage Vbg to the voltage Va is about 1/100 of the voltage between the voltages Va and Vb. Therefore, it is made possible to apply a voltage being sufficiently smaller than a threshold voltage to the parasitic diode D22 so that the parasitic diode D22 is not turned ON.

Moreover, when a frequency of the voltage Va is decreased, the determination of the voltage Vbg of the backgate by using the parasitic capacitor Cp becomes impossible. Therefore, by connecting the resistor to the capacitor C21 in parallel to achieve a direct-current type fixation of the voltage Vbg, the voltage Vbg of the backgate is made by using the voltage Vb to be put into a direct-current type fixed state. A value of the resistor is preferably about 50k Ω so that much current does not flow through the backgate.

A fifth embodiment of the present invention is described by referring to drawings. FIG.7 shows a block diagram illustrating an IC card to which the rectifier circuit of the present invention is applied. As shown in FIG.7, the IC card includes an antenna 11, a modulator 12, a rectifier 13, a shunt regulator 14, a demodulator 15, and a digital signal processor 16. The antenna 11 transmits or receives data to and from a reader/writer. The modulator 12 modulates data processed by the digital signal processor 16 and transmits the modulated data to the reader/writer via the antenna 11. As the rectifier 13, the rectifier circuits shown in FIGS.1, 3, 5, and 6 are employed. Also, a bridge-connection type rectifier made up of the rectifier circuits shown in FIGS. 1, 3, 5, and 6, or the like is used. The rectifier 13 derives high-frequency power from high-frequency energy fed from the reader/writer and converts the power into a direct-current source power (direct-current voltage) and then outputs the converted power to the modulator 12, shunt regulator 14, demodulator 15, and digital signal processor 16. The shunt regulator 14 is used to control the source power voltage so that the source voltage is kept constant. The digital signal processor 16 transmits and receives data to and from the reader/writer and performs specified digital processing.

Thus, by applying the rectifier circuits shown in FIGS.1, 3, 5, and 6 to the rectifier 13, it is made possible to increase the reliability of the rectifier 13 and IC cards to which power is supplied by radio. It is needless to say that the rectifier circuits shown in FIGS.1, 3, 5, and 6 can be applied also to ID tags and other electronic devices, the reliability of which can be improved as well.

Next, descriptions are made about a result from simulation of performance of the rectifier circuit shown in FIG. 3 and a result from simulatin of the performance of the rectifier circuit shown in FIG.3 in which the backgate is connected directly to the source or drain and the capacitor C11 is not used.

FIG.8 shows the rectifier circuit shown in FIG. 3 in which the backgate is connected directly to the drain. In FIG.8, same reference numbers are assigned to the same components as employed in FIG.3 and their descriptions are omitted accordingly. As shown in FIG.8, in the rectifier circuit, the backgate is connected directly to the drain and the capacitor C11 as shown in FIG.3 is not employed. Since the backgate is connected directly to the drain, the parasitic diode D12 as shown in FIG.3 does not occur.

FIG. 9 shows voltages to be input and output to and from the rectifier circuit shown in FIG.8. In FIG.9, the waveform c1 shows a waveform of the voltage Va to be input to the rectifier circuit shown in FIG. 8 and the waveform c2 shows a waveform of the voltage Vb to be output from the rectifier circuit.

FIG.10 shows a current flowing through the backgate in the rectifier circuit shown in FIG.8. In FIG.10, the waveform c3 shows a waveform of a current flowing through the backgate in the rectifier circuit shown in FIG.8. In the rectifier circuit shown in FIG. 8, if the voltage Va is higher than the voltage Vb, the PMOS transistor M11 is turned ON, causing a current to flow in a source-to-drain direction. This causes electric charges to be accumulated in the capacitor C12. If the voltage Va is lower than the voltage Vb, the PMOS transistor M11 is turned OFF, causing no current to flow.

The voltage Vb, since electric charges have been accumulated in the capacitor C12, is kept constant as shown by the waveform c2 in FIG.9. Moreover, if the voltage Va is higher by a threshold voltage of the parasitic diode D11 than the voltage Vb, the parasitic diode D11 is turned ON. This causes a current to flow through the backgate as shown by the waveform c3 in FIG.10. In the PMOS transistor M11, if the backgate is connected directly to the drain, a current flows through the backgate, which causes a decrease in reliability of the PMOS transistor M11. Moreover, since the current flows not only throught the PMOS transistor M11 but also through the parasitic diode D11, it is impossible to obtain linearity of the current flowing between the drain and the source.

FIG.11 shows the rectifier circuit shown in FIG. 3 in which the backgate is connected directly to the source. In FIG.11, same reference numbers are assigned to the same components as employed in FIG.3 and their descriptions are omitted accordingly. As shown in FIG. 11, in the rectifier circuit, the backgate is connected directly to the source and the capacitor C11 as shown in FIG. 3 is not used. Since the backgate is connected directly to the source, the parasitic diode D11 shown in FIG.3 does not occur.

FIG.12 shows voltages to be input and output to and from the rectifier circuit shown in FIG.11. In FIG.12, the waveform d1 shows a waveform of the voltage Va to be input to the rectifier circuit shown in FIG. 11 and the waveform d2 shows a waveform of the voltage Vb to be output from the rectifieer circuit.

FIG.13 shows a current flowing through the backgate in the rectifier circuit shown in FIG.11. The waveform d3 in FIG.13 shows a waveform of a current flowing through the backgate in the rectifier circuit in FIG.11. In the rectifier circuit shown in FIG.11, if the voltage Va is higher than the voltage Vb, the PMOS transistor M11 is turned ON, causing a current to flow in a source-to-drain direction. Since a reverse-biased voltatge is applied to the parasitic diode D12, as shown by the waveform d3 in FIG.13, no current flows through the backgate. The voltage Vb, since electric charges are accumulated in the capacitor C12, is kept constant as shown by the waveform d2 in FIG. 12.

If the voltage Va is lower than the voltage Vb, the PMOS transistor M11 is turned OFF, causing no current to flow. On the other hand, a positive-biased voltage is applied to the parasitic diode D12 and, if this positive-biased voltage exceeds a threshold voltage of the parasitic diode D12, a current flows through the backgate as shown by the waveform d3 in FIG.13. Moreover, in this case, the voltage Vb is kept constant by electric charges accumulated in the capacitor C12 as shown by the waveform d2 in FIG. 12. Thus, in the PMOS transistor M11, when the backgate is connected directly to the source, a current flows through the backgate, which causes a decrease in reliability of the PMOS transistor M11.

FIG.14 shows voltages to be input and output to and from the rectifier circuit shown in FIG.3. In FIG.14, the waveform e1 shows a waveform of the voltage Va to be input to the rectifier circuit shown in FIG.3 and the waveform e2 shows a waveform of the voltage Vb to be output from the rectifier circuit. Also, the waveform e3 shows a waveform of the voltage Vbg to be applied to the backgate in the rectifier circuit in FIG.3.

FIG.15 shows a current flowing through the backgate in the rectifier circuit shown in FIG.3. In FIG.15, the waveform e4 shows a waveform of a current flowing through the backgate in the rectifier circuit shown in FIG.3.

In the rectifier circuit shown in FIG.3, if the voltage Va is higher than the voltage Vb, the PMOS transistor M11 is turned ON, causing a current to flow in the source-to-drain direction. Also, at this time point, if the voltage Vbg is lower by a threshold voltage of the parasitic diode D11 than the voltage Va, the parasitic diode D11 is turned ON, causing a current to flow. However, the voltage Vbg is boosted more by the capacitor C11 compared with the case in which the backgate is connected directly to the drain and, therefore, a current flows less easily through the parasitic diode D11. Moreover, at first rising of the voltage Va, as shown by the waveform e4 in FIG. 15, a current flows via the capacitor C11.

If the voltage Va is lower than the voltage Vb, the PMOS transistor M11 is turned OFF. At this time, since a reverse-biased voltage has been applied to the parasitic diode D11, no current flows through the backgate.

The current flowing through the backgate in the rectifier circuit shown in FIG.3, as shown by the waveform e4 in FIG. 15 is sufficiently small when compared with currents shown by the waveform c3 in FIG. 10 and by the waveform d3 in FIG.13. Therefore, since almost all the currents flow through the PMOS transistor M11, linearity of the current flowing between the drain and source can be improved. Moreover, since almost no currents flow through the backgate, the reliability of the PMOS transistor M11 can be increased.

In the rectifier circuit of the present invention, by applying a bias voltage to the backgate in the diode-connected transistor to calibrate an operating point of the parasitic diodes D1 and D2, a current is made to flow less easily through the backgate or no current is made to flow through the backgate. This enables the improvement of linearity of a current flowing between the drain and source and the increase in reliability of the transistor.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling wihtin the scope of the invention in the appended claims and their equivalents.

## Claims

1. A rectifier circuit for rectifying a voltage comprising:

   a diode-connected transistor; and
   a bias voltage supplying circuit to supply a bias voltage to a backgate in the transistor and to calibrate an operating point of a parasitic diode occurring in the transistor.

2. The rectifier circuit according to Claim 1, wherein the bias voltage supplying circuit calibrates the operating point so that an amount of currents flowing through the parasitic diode is reduced or no current is made to flow through the parasitic diode.

3. The rectifier circuit according to Claim 1, wherein the bias voltage supplying circuit is a capacitor which supplies a voltage at a drain in the transistor to the backgate.

4. The rectifier circuit according to Claim 3, wherein, when the transistor is an NMOS (N-type Metal Oxide Semiconductor) transistor, a resistor is connected to the capacitor in parallel.

5. The rectifier circuit according to Claim 1, wherein the transistor is a MOSFET (MOS Field Effect Transistor) .

6. The rectifier circuit according to Claim 1, wherein an output port of the transistor is connected to a voltage holding capacitor to keep an output voltage constant.

7. An electric device to be operated by power being supplied by radio comprising:

   a rectifier circuit having a diode-connected transistor and a bias voltage supplying circuit to supply a bias voltage to a backgate in the transistor and to calibrate an operating point of a parasitic diode occurring in the transistor.

8. A method for rectifying a voltage comprising the step of:

   applying a bias voltage to a backgate in a diode-connected transistor; and
   calibrating an operating point of a parasitic diode occurring in the transistor.

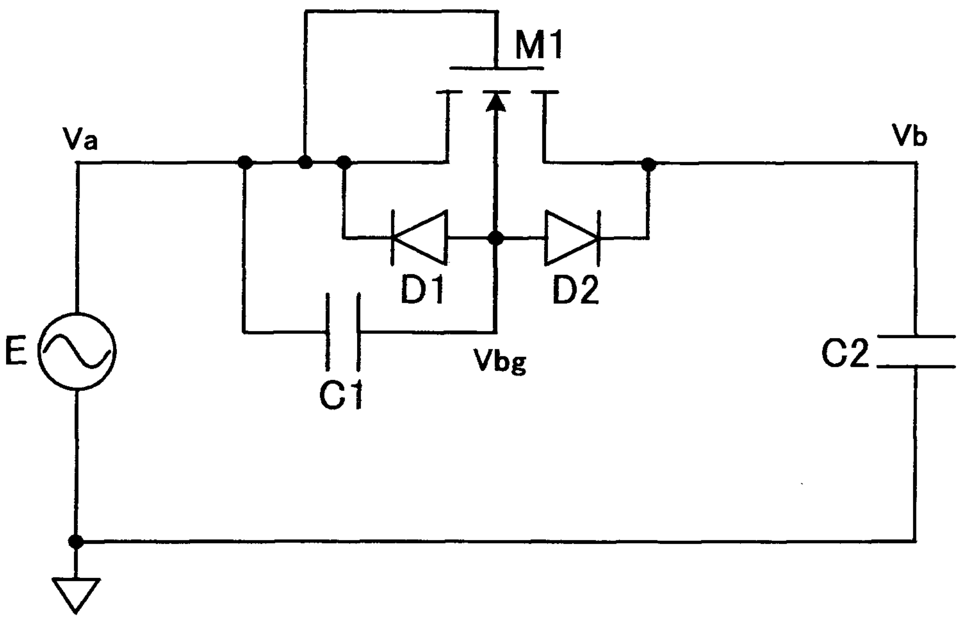


FIG. 1

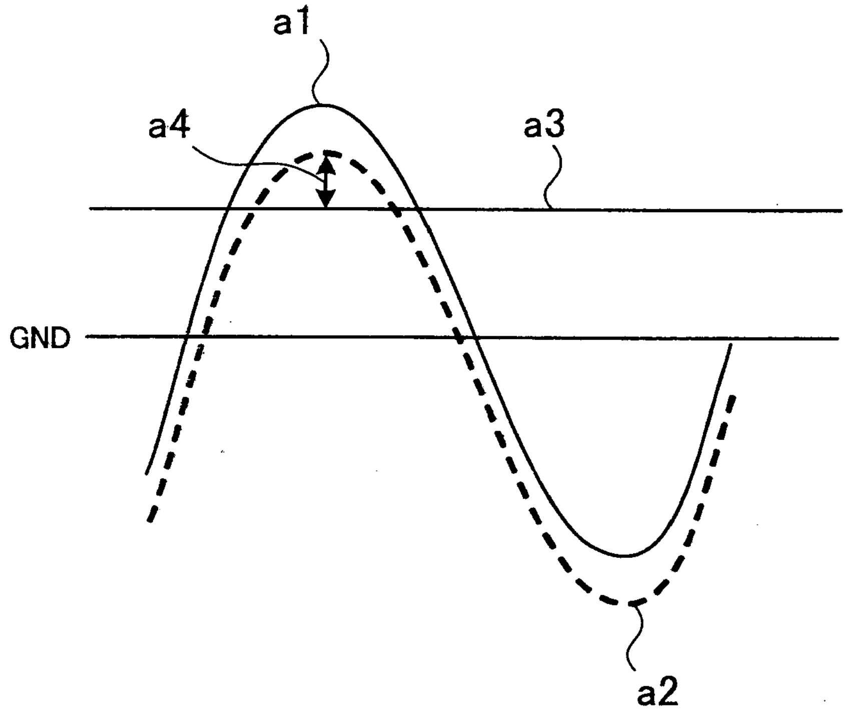


FIG. 2

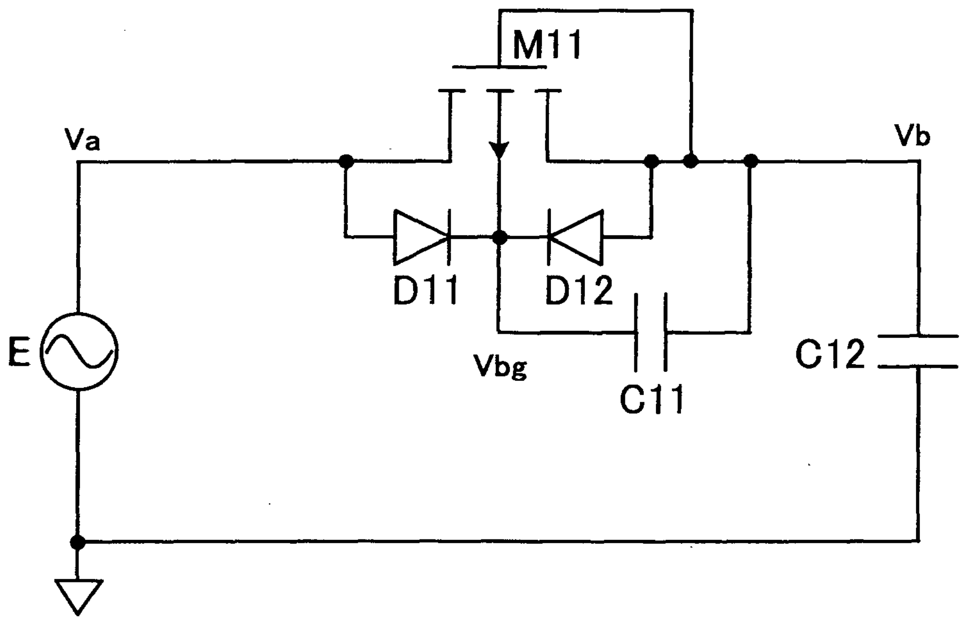


FIG. 3

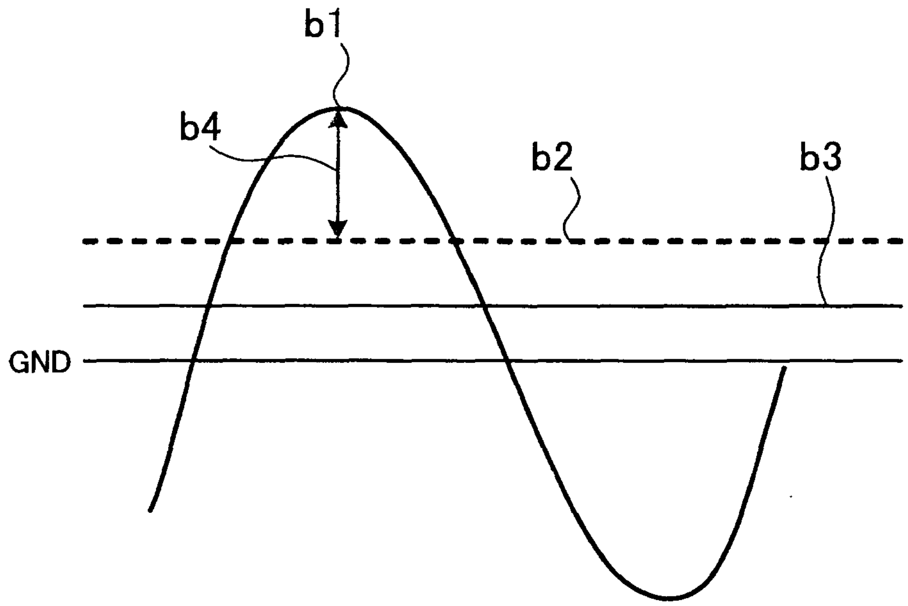


FIG. 4

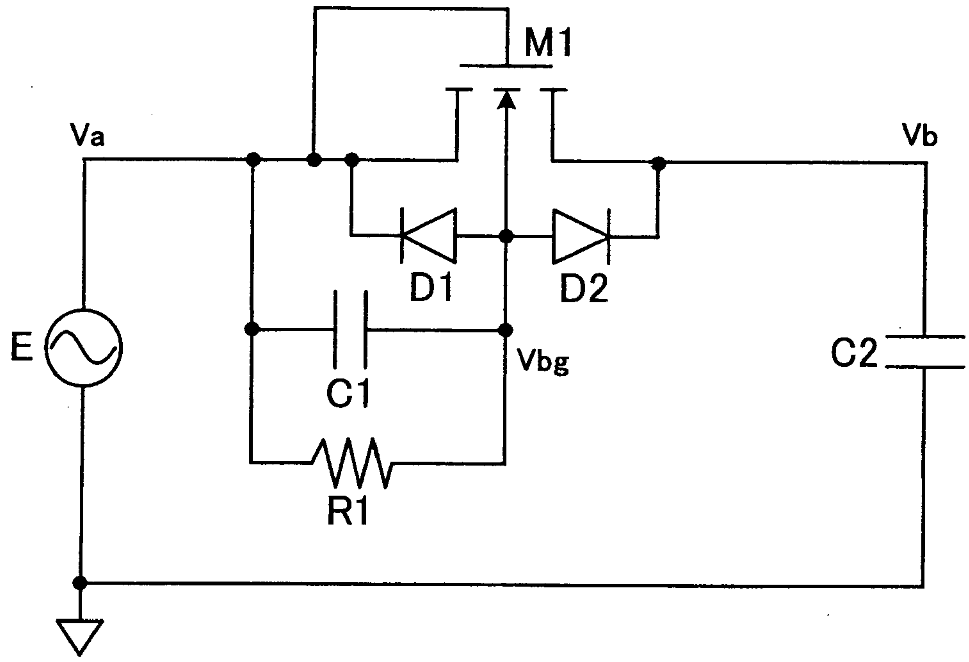


FIG. 5

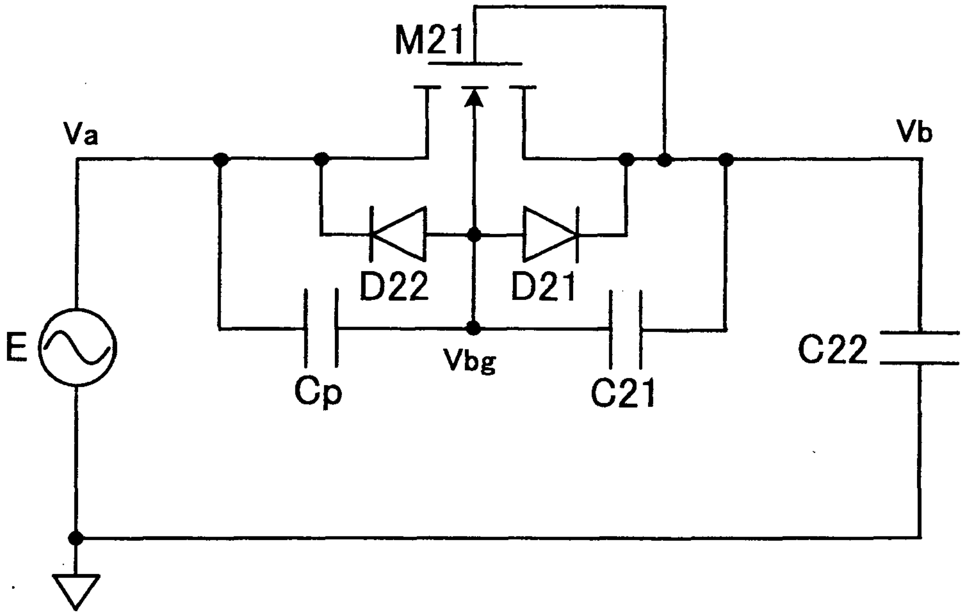


FIG. 6

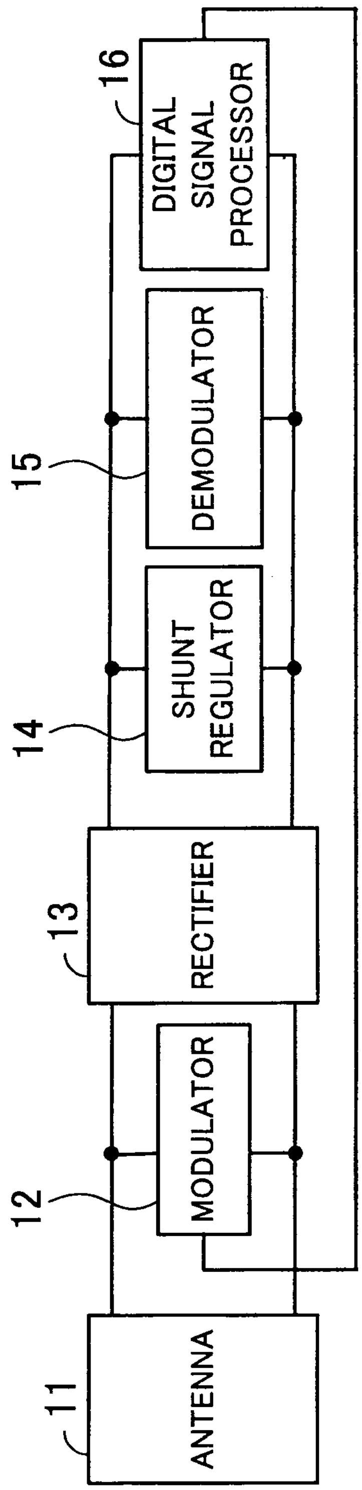
11
ANTENNA
12
MODULATOR
13
RECTIFIER
14
SHUNT REGULATOR
15
DEMODULATOR
16
DIGITAL SIGNAL PROCESSOR

FIG. 7

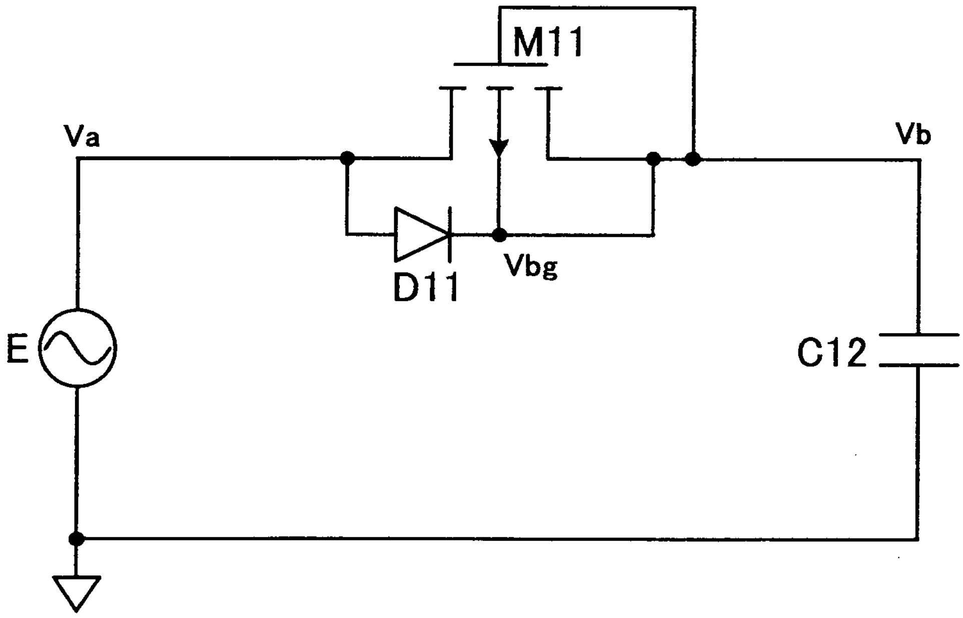


FIG. 8

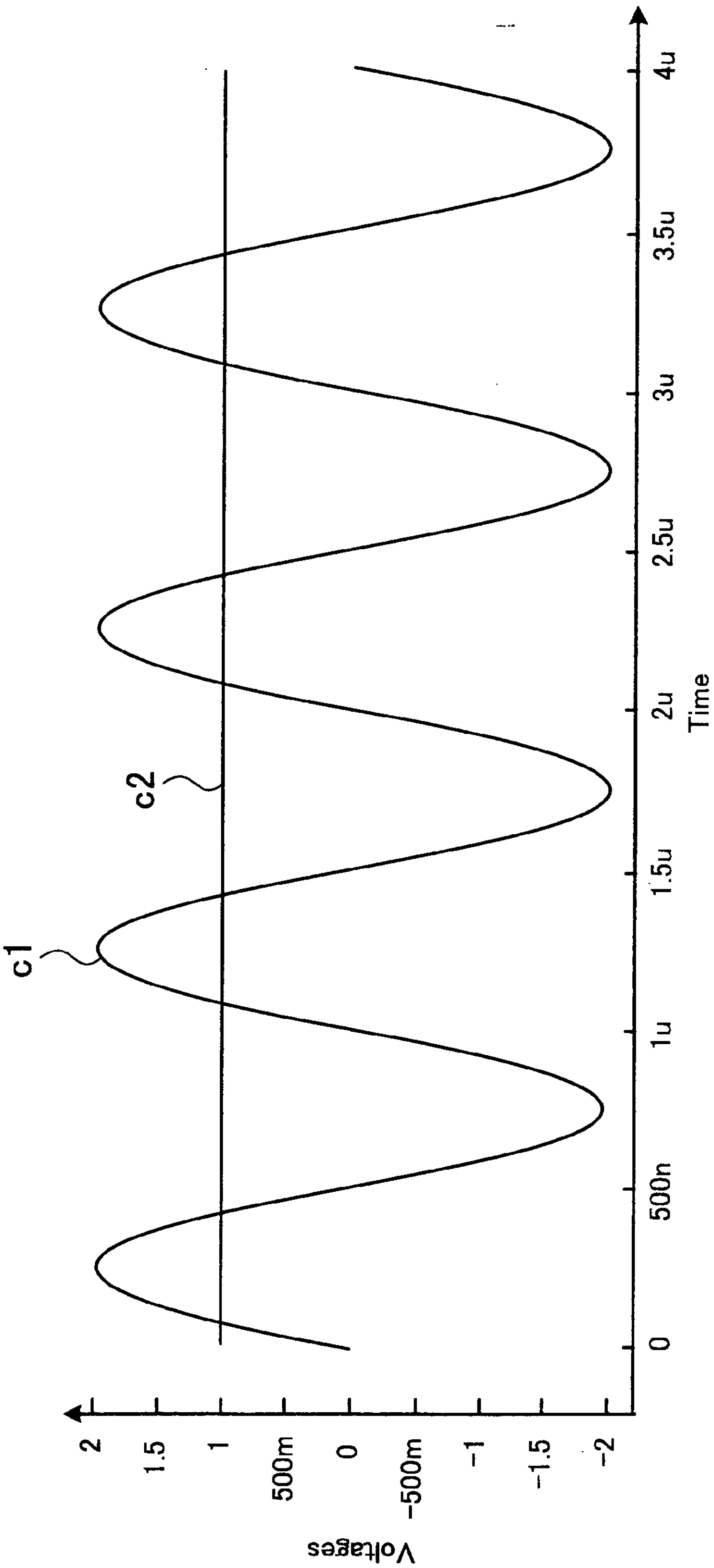

Voltages
2
1.5
1
500m
0
-500m
-1
-1.5
-2
c1
c2
0
500n
1u
1.5u
2u
2.5u
3u
3.5u
4u
Time


FIG. 9

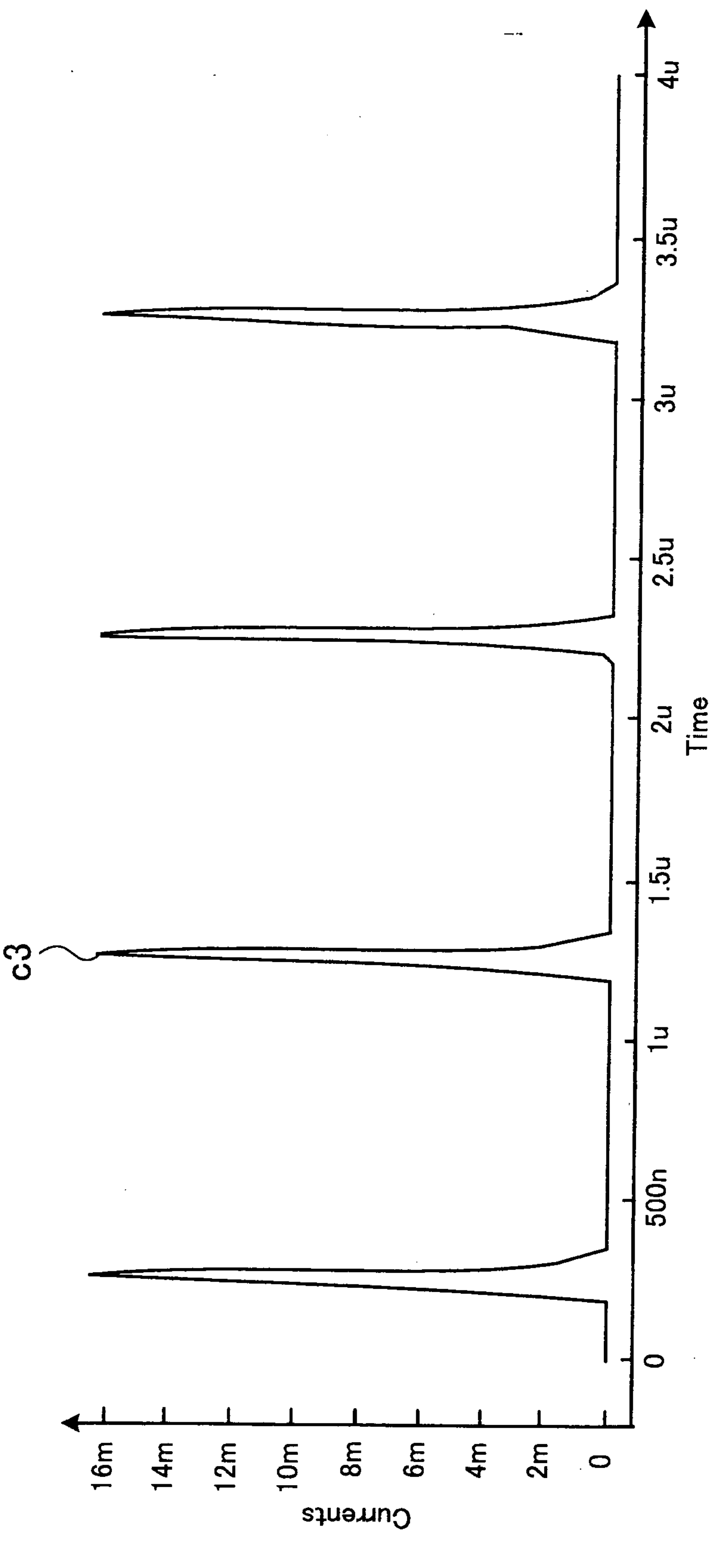
c3
Currents
16m
14m
12m
10m
8m
6m
4m
2m
0
0
500n
1u
1.5u
2u
2.5u
3u
3.5u
4u
Time

FIG. 10

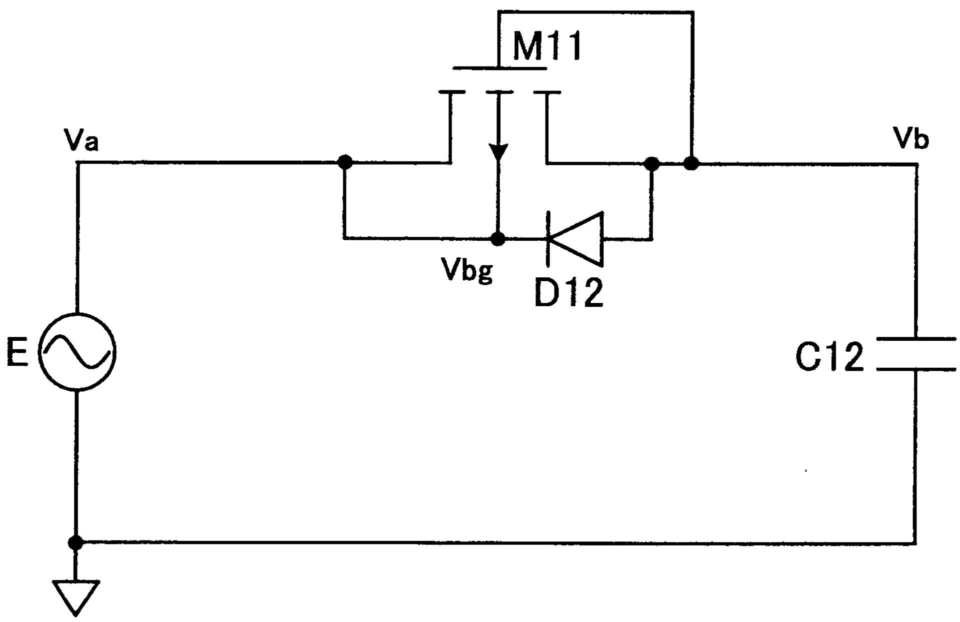


FIG. 11

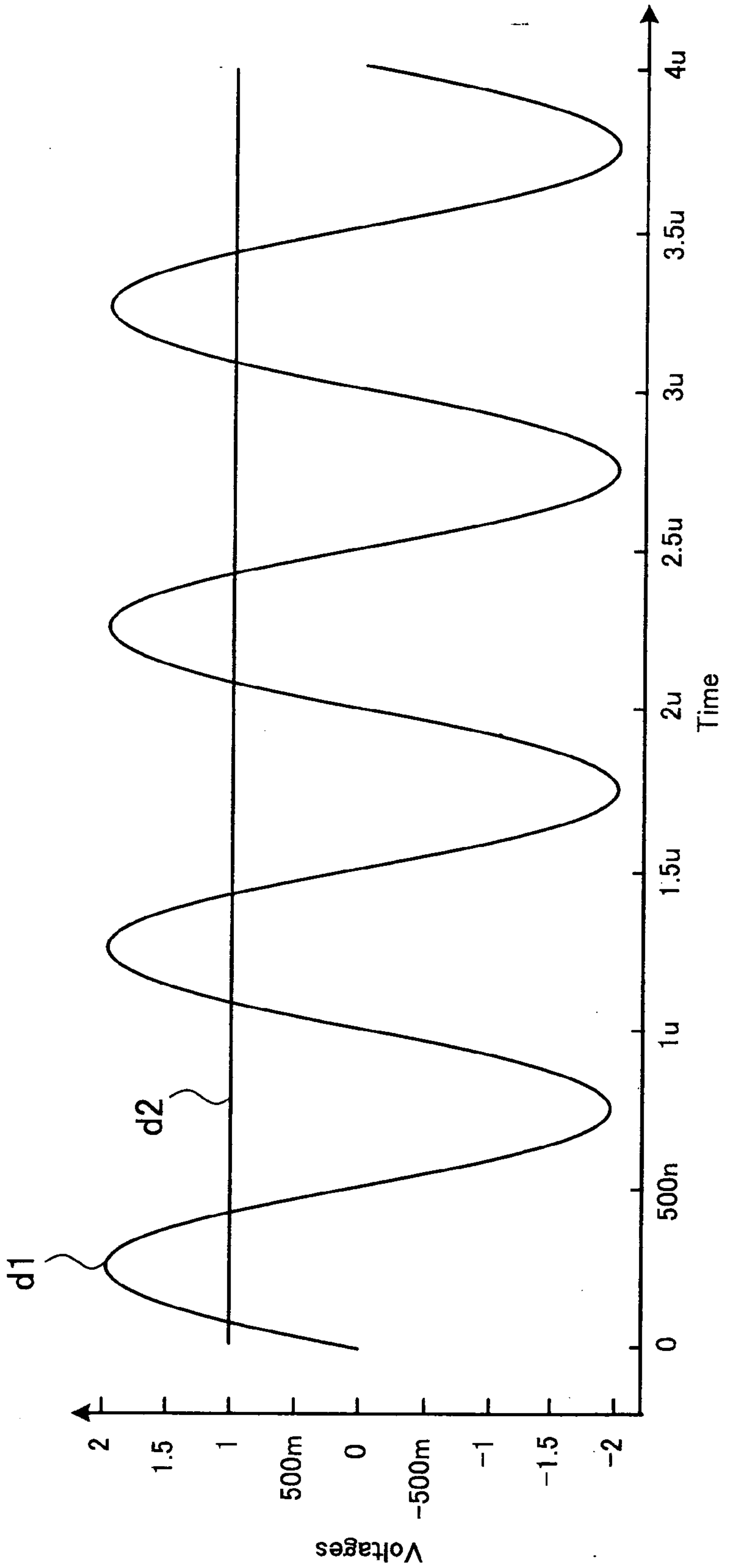
d1
d2
Voltages
2
1.5
1
500m
0
-500m
-1
-1.5
-2
Time
0
500n
1u
1.5u
2u
2.5u
3u
3.5u
4u

FIG. 12

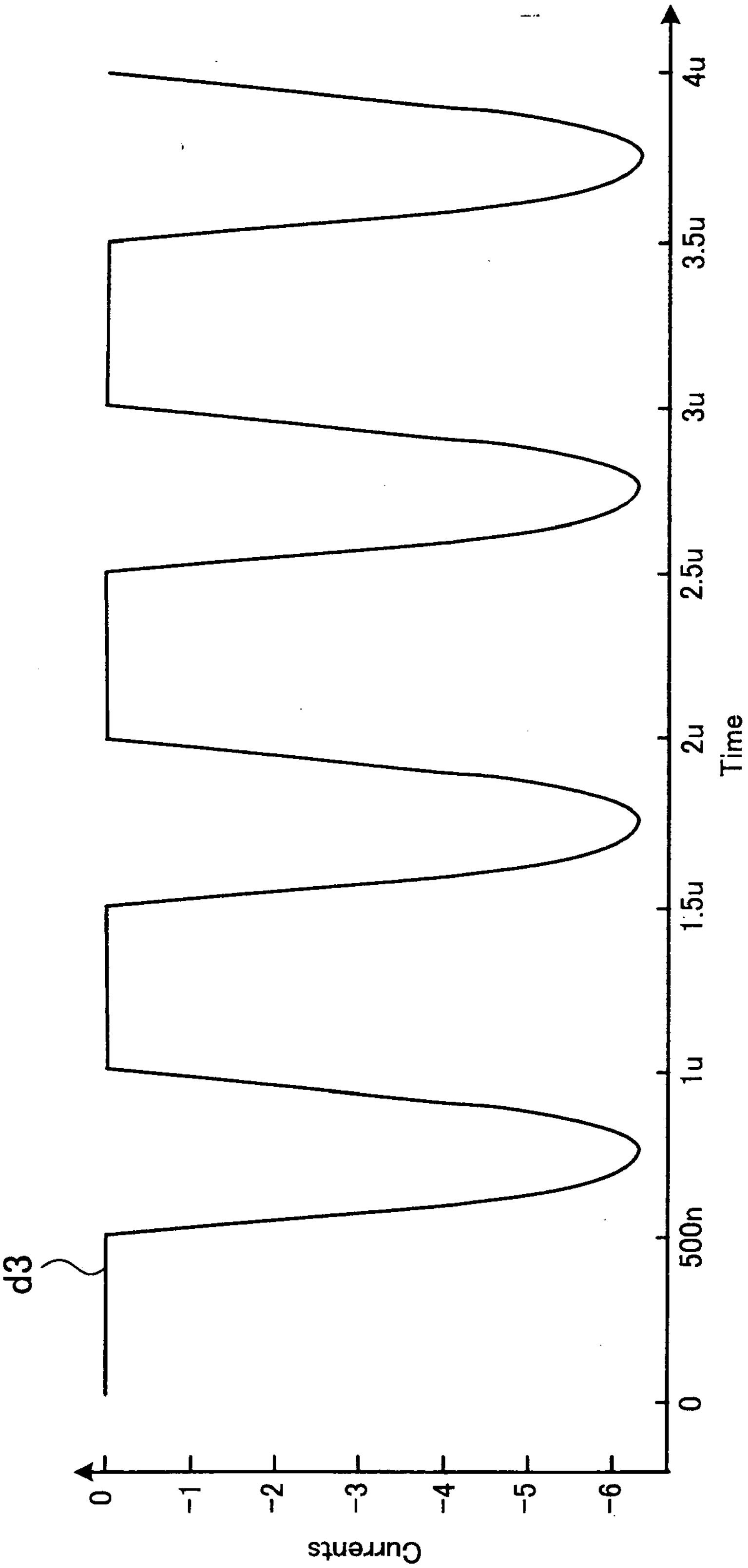


FIG. 13

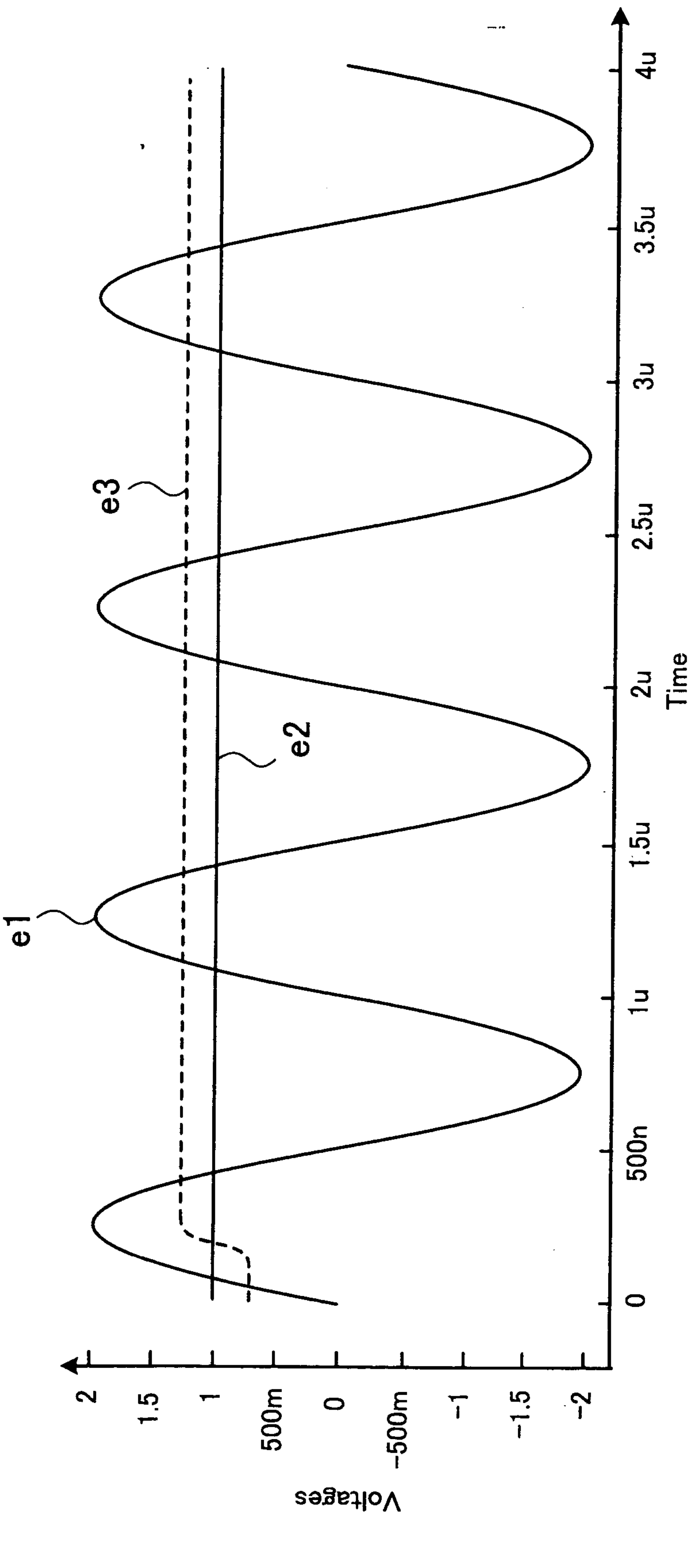
Voltages
2
1.5
1
500m
0
-500m
-1
-1.5
-2
Time
0
500n
1u
1.5u
2u
2.5u
3u
3.5u
4u
e1
e2
e3

FIG. 14

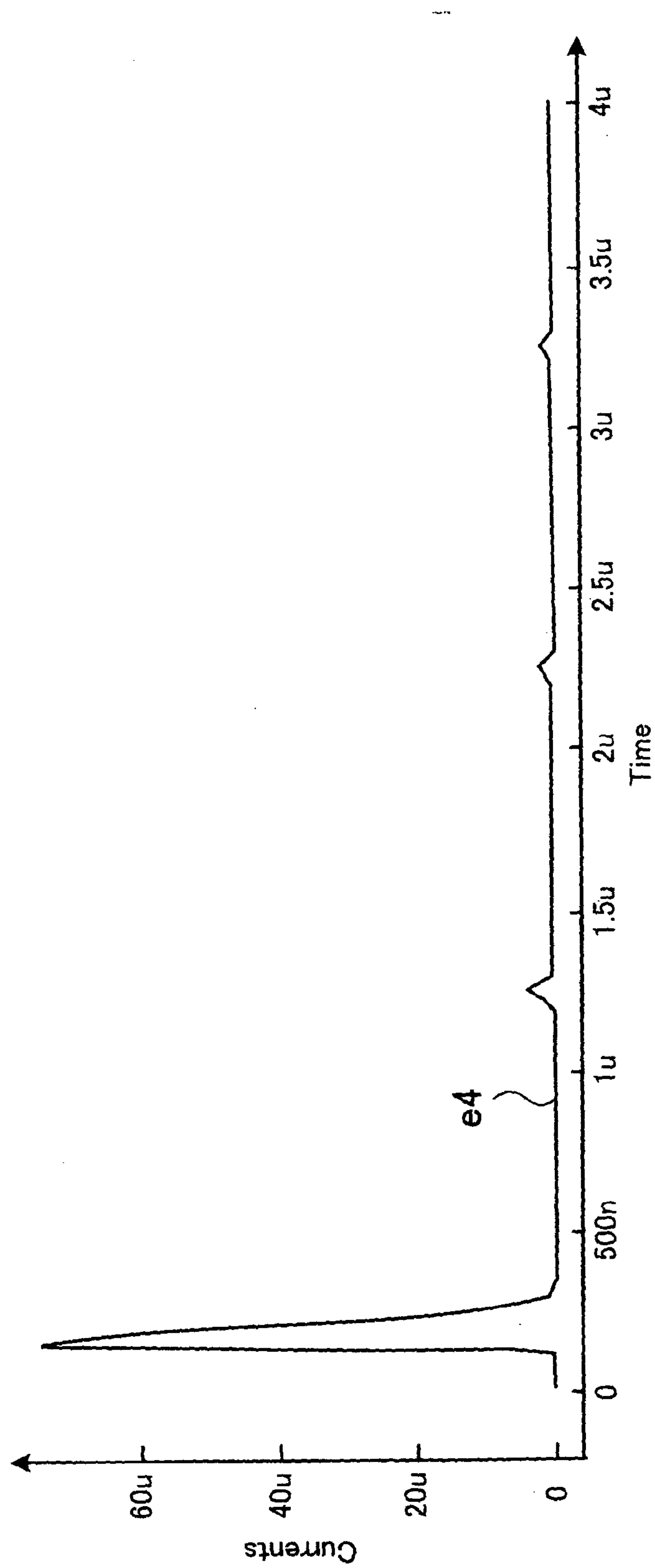


FIG. 15

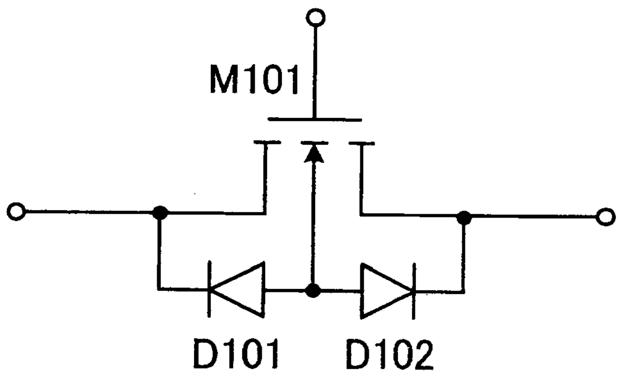


FIG. 16

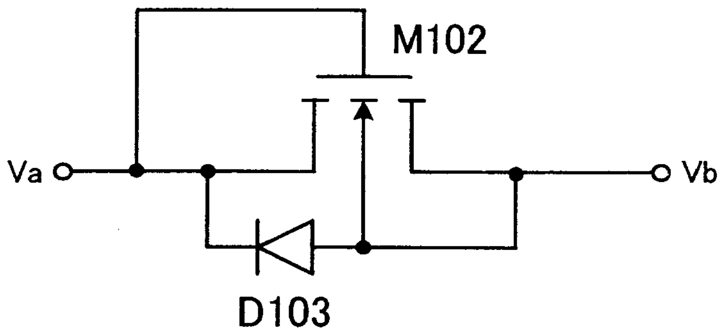


FIG. 17

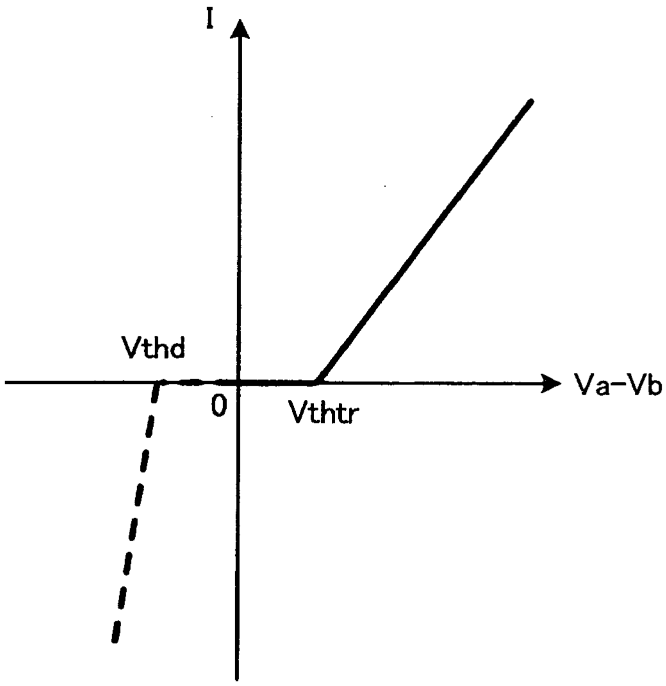


FIG. 18

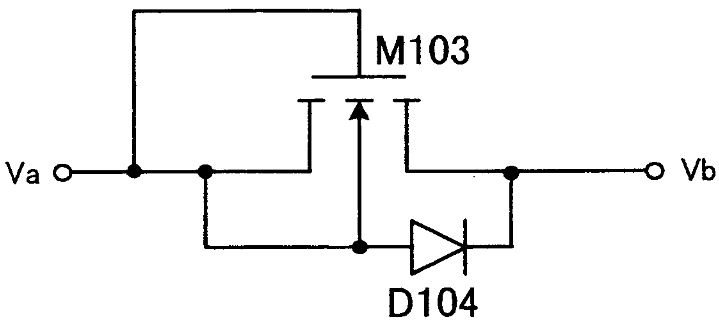


FIG. 19

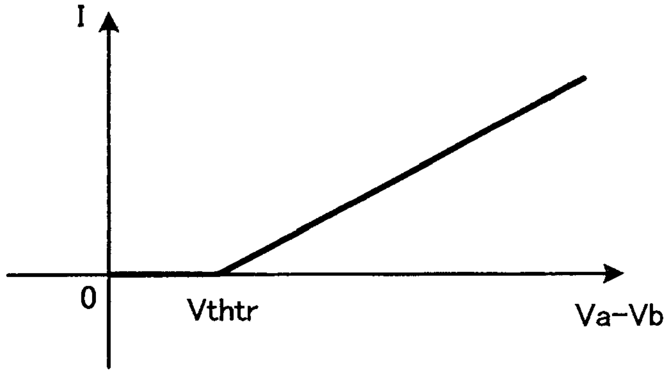


FIG. 20

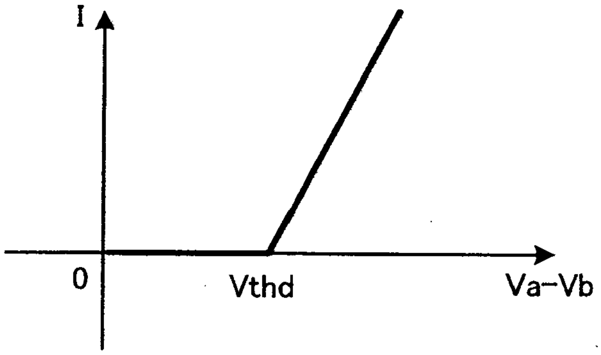


FIG. 21

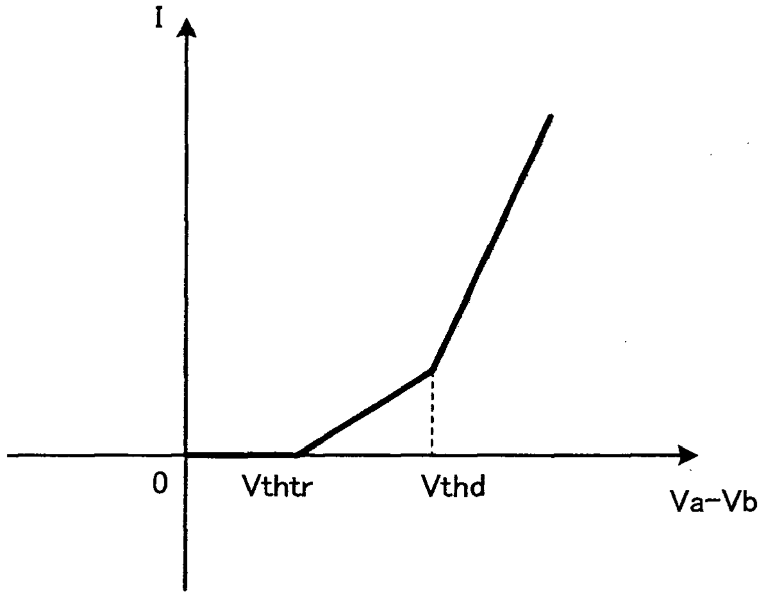


FIG. 22

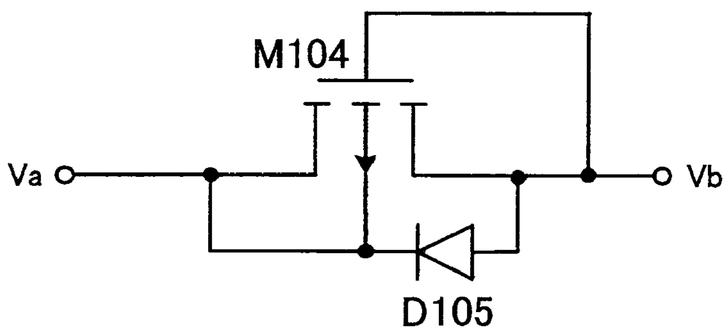


FIG. 23

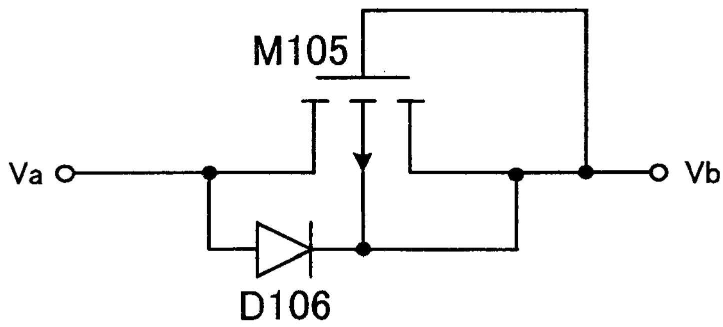


FIG. 24